# FASCICULE DE BREVET EUROPEEN

(11) **EP 1 523 245 B1**
(45) Date de publication et mention de la délivrance du brevet: **16.04.2014**
(21) Numéro de dépôt: 03753645.5
(22) Date de dépôt: 15.07.2003
(51) Int. Cl.: A23L 1/212, A23G 3/34, A21D 2/16

(54) **PRODUIT DE SUBSTITUTION DE LA GELATINE ET APPLICATIONS DANS LE DOMAINE ALIMENTAIRE**
ERSATZ VON GELATINE UND VERWENDUNG IN LEBENSMITTELN
GELATIN SUBSTITUTE PRODUCT AND USES IN FOOD PREPARATION

(30) Priorité: 18.07.2002 FR 0209155
(43) Date de publication de la demande: 20.04.2005
(73) Titulaire: Barry Callebaut AG, 8005 Zürich (CH)
(72) Inventeur: BERTRAND, Philippe, F-78870 Bailly (FR); MARAND, Philippe, F-78370 Plaisir (FR)
(74) Mandataire: Peaucelle, Chantal
(86) Numéro de dépôt international: PCT/FR2003/002239
(87) Numéro de publication internationale: WO 2004/008882

(56) Documents cités:
- EP-A- 0 029 153
- EP-A- 0 393 963
- EP-A- 1 369 041
- WO-A-00/11966
- WO-A-89/02223
- WO-A-98/13133
- BE-A6- 1 003 493
- US-A- 2 203 643
- US-A- 4 663 176
- MURILO HADAD PIRES: "GELATINE REPLACERS AN INDUSTRY SEARCHES FOR ALTERNATIVES" FOOD MARKETING AND TECHNOLOGY, NUERNBERG, DE, vol. 15, no. 2, avril 2001 (2001-04), pages 7-8, XP001124341 ISSN: 0932-2744

## Description

La présente invention est relative à un produit de substitution de la gélatine et à ses applications, en particulier, dans le domaine alimentaire.

Suite à l'émergence de l'encéphalopathie spongiforme chez les bovins, l'utilisation de la gélatine dans des préparations culinaires est aujourd'hui controversée. En outre, les inventeurs, professionnels de la pâtisserie, ont noté que la gélatine présentait notamment les inconvénients suivants : certains types de gélatine peuvent présenter un goût ; de plus, le produit solidifié désiré possède souvent une texture caoutchouteuse; en outre, le cadre de travail des pâtissiers influence de manière décisive et directe la microbiologie de la gélatine. Celle-ci est en effet souvent manipulée à main nue, ce qui pose des problèmes d'hygiène du fait de sa réactivité.

WO0011966 fait mention d'une composition comportant comme produit de substitution de la gélatine dans des préparations culinaires du beurre.

Le travail des inventeurs les a mené à trouver un nouveau produit de substitution, répondant de manière plus satisfaisante aux exigences du consommateur, et exempt notamment de tout soupçon du point de vue de l'hygiène alimentaire.

L'invention se rapporte donc à un produit de substitution de la gélatine, ainsi qu'à son procédé d'incorporation à des ingrédients pour élaborer une préparation culinaire.

L'invention propose un produit de substitution de la gélatine caractérisé en ce qu'il contient essentiellement beurre de cacao.

Par « essentiellement », on entend au moins 99% de beurre de cacao. En particulier, le substitut selon l'invention peut être constitué de 100% de beurre de cacao.

Comme cela est décrit ci-après, la composition du beurre de cacao lui confère un certain nombre de caractéristiques bien spécifiques mises en évidence par les inventeurs, et particulièrement adéquate pour une utilisation en tant que produit de substitution de la gélatine.

Les matières grasses de beurre de cacao selon l'invention ne possèdent pas de propriétés gélifiantes comme la gélatine. En revanche, elles possèdent des propriétés de stabilisation. Le terme « substitut de la gélatine » est employé pour signifier que le produit est utilisé à l'identique, en remplacement de la gélatine, selon la méthode suivante :
- On introduit à froid le produit au sein de la préparation culinaire, la préparation étant chauffée à une température supérieure à 60°C,
- On mélange jusqu'à obtention d'une pâte homogène, et ce de préférence, durant le refroidissement de la préparation,
- On laisse refroidir à température ambiante avant de mettre au réfrigérateur.

Selon un autre mode d'incorporation décrit plus loin, le produit peut être chauffé à une température de 30 à 40°C avant incorporation dans la préparation culinaire, à cette même température.

A la différence de la gélatine, le produit n'est pas hydraté avant incorporation. Son utilisation est donc plus simple. Par ailleurs, cette étape d'hydratation de la gélatine était une étape critique du procédé de fabrication car elle comportait un risque important d'introduction de bactéries dans les préparations culinaires. En effet, la gélatine est un excellent support de développement des bactéries. Le produit selon l'invention se trouve donc être également plus hygiénique.

Les avantages des beurres de cacao sont multiples :

### 1. Le goût

Les produits finis comportant du beurre de cacao comme substituant de la gélatine sont plus frais en bouche que ceux préparés avec la gélatine, ce qui permet de rehausser le goût, les saveurs naturelles et les arômes des autres ingrédients présents dans la préparation (par exemple, les fruits dans le cas d'une mousse aux fruits, et les crèmes, en général).

Par ailleurs, la gélatine, contrairement au beurre de cacao, utilise l'eau des aliments pour se gélifier. En asséchant les aliments pour se gonfler d'eau, elle affadit les préparations la contenant.

Les très bonnes qualités organoleptiques du beurre de cacao comme substitut de la gélatine sont également dues à son excellente palatabilité (impression en bouche). En effet, le beurre de cacao possède un point de fusion à une température proche de celle de la bouche. Par conséquent, en bouche, le beurre de cacao fond et donne un goût crémeux. Une telle caractéristique provient de la composition spécifique de sa matière grasse. Une graisse trop stéarique produit un effet de cire dans la bouche. Au contraire, une graisse trop oléique, produit un goût huileux en bouche. Or, le beurre de cacao, de par sa composition spécifique, ne produit aucun de ces effets désagréables.

Concernant les graisses ne possédant pas une composition proche de celle du beurre de cacao, J. Pontillon, dans son ouvrage « Cacao et Chocolat. Production, utilisation et caractéristiques » (édition Lavoisier, 1998) les décrit comme suit : « Un inconvénient incontestable de ces graisses réside dans la saveur particulièrement désagréable qu'elles peuvent acquérir et communiquer au produit : le goût dit « de savon ». [...] Le beurre de cacao a une place à part dans les matières grasses, puisqu'on admet pour lui une acidité oléique allant jusqu'à 1,75% et cela sans inconvénient pour le goût, car ses acides en C16 et C18 sont neutres à ce point de vue. Par contre, pour la plupart des autres matières grasses, et particulièrement les raffinées, l'acidité libre ne dépasse pas 0,10%. C'est absolument nécessaire pour les graisses contenant de fortes quantités d'acide laurique et d'acide plus court, car, à l'état libre, ces acides présentent des goûts très prononcés allant de l'impression savonneuse à des goûts tirant sur le butyrique (beurre rance) plus la chaîne grasse raccourcit. » Par conséquent, la moindre introduction de lipases conduisant au raccourcissement des chaînes provoque une forte détérioration du goût.

### 2. La texture

La gélatine confère aux préparations une texture mousseuse assez élastique ou caoutchouteuse, conférant à la préparation un caractère artificiel. Les préparations à base de beurre de cacao donnent au contraire une agréable texture souple, crémeuse, comparable à celle d'un yaourt haut de gamme.

### 3. L'aspect visuel

Par rapport à l'utilisation de la gélatine, le produit de substitution à base de beurre de cacao permet d'obtenir une couleur plus proche (plus naturelle, authentique) des autres ingrédients utilisés dans la préparation culinaire. L'aspect final des préparations est plus brillante.

### 4. La santé

Le beurre de cacao présente de très bonnes qualités nutritionnelles sans être hypercholestérolémiant.

De plus, par rapport aux autres graisses de type concrète, il ne contient pas d'acide gras de conformation « trans ». En effet, ces acides gras apparaissent lors de l'hydrogénation des matières grasses (bio-hydrogénation pour les matières grasses laitières, hydrogénation partielle pour les matières grasses végétales). Or, suite à des études sur l'utilisation de ces graisses et leur impact sur la santé, certains pays étudient des propositions de lois consistant à limiter le taux de ces acides gras dans les produits alimentaires.

### 5. Le caractère naturel du produit

Le substitut de la gélatine constitué de beurre de cacao est un produit naturel issu de la fève de cacao. Or, les fèves de cacao peuvent bénéficier d'une bonne traçabilité. Avantageusement, le substitut selon l'invention est constitué de 100% de beurre de cacao.

Par ailleurs, le beurre de cacao est l'une des rares matières grasses végétales à être solide à température ambiante naturellement. En effet, les autres matières grasses de type concrètes sont obtenues par fractionnement (par exemple, l'huile de palme ou de palmiste) et/ou hydrogénation (huile de palmiste, de coprah). Ces étapes nécessitent l'introduction d'additifs ou de produits chimiques tels que des catalyseurs (ex, Nickel de Raney pour l'hydrogénation). Ces matières grasses font en outre souvent l'objet d'une décoloration. Le beurre de cacao utilisé comme substitut de la gélatine ne contient aucune trace de réactifs chimiques due à ce type de transformation.

Tous ces avantages font du beurre de cacao un produit de choix pour être utilisé en tant que produit de substitution de la gélatine.

Le substitut selon l'invention peut être incorporé très facilement dans les mélanges. Selon un mode de réalisation préféré de l'invention, le beurre de cacao utilisé comme substitut de la gélatine se présente sous forme de poudre. Une telle présentation permet une fonte instantanée et homogène du substitut, ainsi qu'un dosage très précis du produit. Son utilisation est donc simple, rapide et précise. La forme poudre du beurre de cacao peut être par exemple obtenu par cryogénisation du beurre de cacao. Un tel procédé est décrit dans la demande EP0934110.

Selon un autre mode de réalisation, le produit de substitution selon l'invention peut comporter éventuellement des additifs tels que les lécithines et autres émulsifiants, les antioxydants, dans des proportions allant de 0 à 1% maximum.

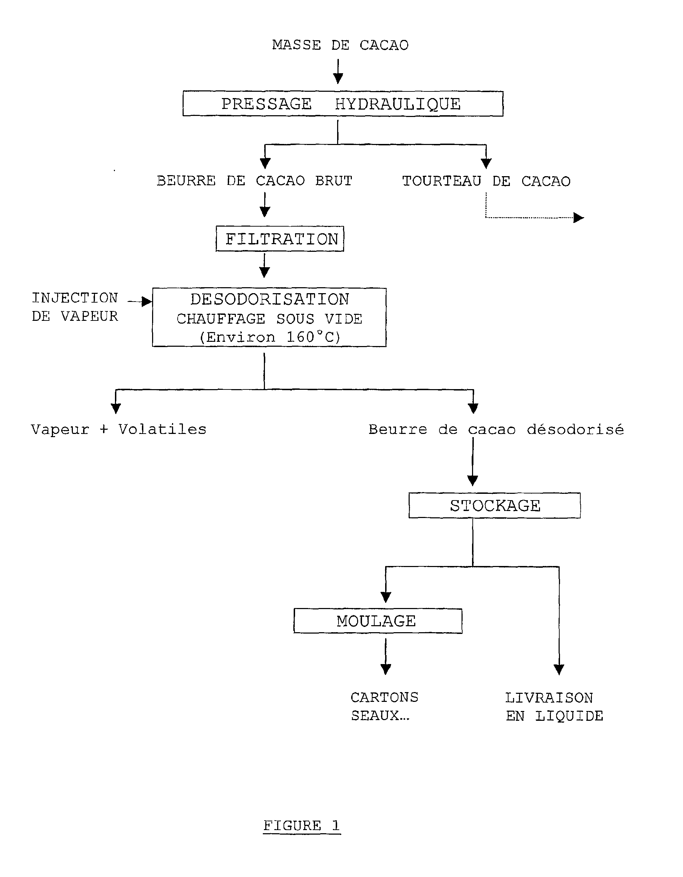

Selon les applications visées, le produit de substitution pourra être désodorisé à 90-95%. On aura recours par exemple au procédé décrit dans la figure 1. Comme indiqué sur ce schéma, cette étape ne modifie en rien le caractère naturel du produit puisqu'elle consiste en un chauffage avec injection de vapeur d'eau.

Pour d'autres applications, il peut être utile de conserver le goût du beurre de cacao de première pression hydraulique.

Dans ce dernier cas, il est intéressant de relever que le cacao non désodorisé est plus résistant à l'oxydation dans le temps. L'invention propose également un procédé d'incorporation du produit de substitution selon l'invention, caractérisé en ce que ledit produit est fondu à une température de 30 à 40°C avant d'être incorporé aux ingrédients pour une préparation culinaire.

Alternativement, et plus particulièrement lorsque le substitut se présente sous forme de poudre, celui-ci peut être incorporé directement dans la préparation lorsque celle-ci est chauffée à une température supérieure à 60°C.

Quelle que soit la méthode d'incorporation utilisée, il est préférable de mélanger régulièrement la préparation pendant le refroidissement afin d'obtenir un mélange homogène.

Dans le domaine des pâtissier-traiteurs, il est préférable que la préparation culinaire possède un taux d'humidité inférieur à 70% avant incorporation du substitut selon l'invention. Idéalement, le taux d'humidité devrait se situer autour de 40 à 50%. Un tel taux d'humidité permet d'obtenir une préparation parfaitement stabilisée sans être dure pour autant. Il revient à l'homme du métier d'adapter sa recette en augmentant la matière sèche ou le taux d'humidité en fonction de la dureté désirée.

Avantageusement, pour les mousses de fruits, il est conseillé de prélever un tiers de la pulpe de fruits chauffée à 60-80°C environ, puis d'ajouter le produit de substitution selon l'invention, de mélanger et enfin d'incorporer le reste de la pulpe froide afin d'obtenir un refroidissement rapide à température ambiante. Cependant, un refroidissement trop rapide, par exemple, en plaçant le mélange au congélateur, est vivement déconseillé.

La quantité de produit de substitution sera choisie en fonction de la préparation à élaborer.

En particulier, le beurre de cacao sera avantageusement incorporé à une quantité égale à deux à quatre fois la quantité en poids de gélatine habituellement mise en oeuvre dans la préparation culinaire.

Le produit de substitution peut être utilisé en remplacement de la gélatine dans toutes sortes de préparations culinaires, et plus particulièrement, dans la fabrication de pâtisseries jusqu'à 180°C.

On citera à titre d'exemple les préparations suivantes : terrines, mousses aux fruits, bavarois, crèmes, bonbons, yaourts, crèmes dessert, tartes au citron, crème patissière pour éclairs, religieuses, choux, flans, riz au lait, fromages blanc ...

On notera également avec intérêt l'utilisation des produits de substitution de l'invention pour élaborer des préparations casher.

Les différents aspects de l'invention seront mieux compris au vu des exemples 1 à 9 suivants donnés à titre illustratif.

### Exemple 1 : Mousse Framboise

| MOUSSE FRAMBOISE *(Beurre de Cacao)* | | |
|---|---|---|
| Chauffer à 30°C | 300 g | Pulpe de framboise |
| Avec | 175 g | Sucre semoule |
| Ajouter | 55g | Beurre de Cacao fondu à 30-32°C |
| A 30°C ajouter | 650g | Crème fleurette montée |

| MOUSSE FRAMBOISE *(Gélatine)* | | |
|---|---|---|
| Chauffer à 30°C | 300 g | Pulpe de framboise |
| Avec | 175 g | Sucre semoule |
| Ajouter | 22g | Gélatine feuille hydratée |
| A 30°C ajouter | 650g | Crème fleurette montée |

| | | |
|---|---|---|
| *La recette est identique pour obtenir une mousse à la fraise, mûre, fraise des bois, abricots, passion, griottes, fruits des bois et autres.* | | |

### Exemple 2 : Crème Chocolat Blanc Satin

| CREME Chocolat BLANC SATIN *(Beurre de Cacao)* | | |
|---|---|---|
| Réaliser une crème pâtissière avec | | |
| | 200g | Lait entier |
| | 20g | Sucre semoule |
| | 20g | Poudre à crème |
| | 50g | Jaunes d'oeufs |
| | 1 gousse | Vanille |
| Ajouter après cuisson | | |
| | 130g | Chocolat Blanc Satin |
| Et | 10g | Beurre de Cacao |
| A 30°C ajouter | 300g | Crème fleurette fouettée |

| CREME CHOCOLAT BLANC SATIN *(Gélatine)* | | |
|---|---|---|
| Réaliser une crème pâtissière avec | | |
| | 200g | Lait entier |
| | 20g | Sucre semoule |
| | 20g | Poudre à crème |
| | 50g | Jaunes d'oeufs |
| | 1 gousse | Vanille |
| Ajouter après cuisson | | |
| | 130g | Chocolat Blanc Satin |
| Et | 4g | Gélatine feuille hydratée |
| A 30°C ajouter | 300g | Crème fleurette fouettée |

### Exemple 3 Crème Praline

| CREME PRALINE *(Beurre de Cacao)* | | |
|---|---|---|
| Bouillir | 130g | Sirop à 30°C |
| Verser sur | 100g | Jaunes d'oeufs |
| Ajouter | 400g | Praliné Tradition Lenôtre |
| Et | 18g | Beurre de Cacao |
| A 30°C ajouter | 530g | Crème fouettée montée |

| CREME PRALINE *(Gélatine)* | | |
|---|---|---|
| Bouillir | 130g | Sirop à 30°C |
| Verser sur | 100g | Jaunes d'oeufs |
| Ajouter | 400g | Praliné Tradition Lenôtre |
| Et | 6g | Gélatine feuille hydratée |
| A 30°C ajouter | 530g | Crème fouettée montée |

### Exemple 4 : Mousse Gianduja

| MOUSSE GIANDUJA *(Beurre de Cacao)* | | |
|---|---|---|
| Faire une crème pâtissière avec | | |
| | 300g | Lait entier |
| | 50g | Jaunes d'oeufs |
| | 20g | Poudre de crème |
| | 60g | Sucre semoule |
| | 16g | Beurre de Cacao |
| | 180g | Gianduja Plaisir fondu à 30-32°C |
| | 250g | Crème fleurette montée |

| MOUSSE GIANDUJA *(Gélatine)* | | |
|---|---|---|
| Faire une crème pâtissière avec | | |
| | 300g | Lait entier |
| | 50g | Jaunes d'oeufs |
| | 20g | Poudre de crème |
| | 60g | Sucre semoule |
| | 6g | Gélatine feuille hydratée |
| | 180g | Gianduja Plaisir fondu à 30-32°C |
| | 250g | Crème fleurette montée |

### Exemple 5 : Mousse pour les Quenelles Chocolat Blanc Satin

| MOUSSE POUR LES QUENELLES CHOCOLAT BLANC SATIN *(Beurre de Cacao)* | | |
|---|---|---|
| Faire une crème pâtissière avec | | |
| | 200g | Lait entier |
| | 40g | Sucre semoule |
| | 60g | Jaunes d'oeufs |
| | 20g | Poudre à crème |
| | 15g | Sucre semoule |
| | 1 gousse | Vanille |
| | 400g | Chocolat Blanc Satin |
| | 60g | Beurre de Cacao |
| | 900g | Crème fleurette montée |

### Exemple 6 : Mousse sur une base de crème pâtissière à la pulpe de fruits

| | |
|---|---|
| 600 g | pulpe |
| 150 g | sucre semoule |
| 20 g | jaune d'oeufs |
| 55 g | d'oeufs entiers |
| **40 g** | **beurre de cacao en poudre** |
| 600 g | crème fouettée |

Procéder comme une crème pâtissière avec la pulpe de fruit, ajouter le beurre de cacao, refroidir à 30°C, puis ajouter la crème fouettée.

### Exemple 7 : Mousse cassis

| | |
|---|---|
| 300 g | pulpe de cassis |
| 175 g | sucre semoule |
| **60 g** | **beurre de cacao en poudre** |
| 650 g | crème fleurette montée |

Chauffer un tiers de la pulpe avec le sucre à 70°C, ajouter le beurre de cacao, bien mélanger, incorporer ensuite le restant de la pulpe à 3°C.
Refroidir à 18°C puis incorporer la crème fouetté bien montée.

Recette pouvant se décliner avec de la pulpe de mûres et griottes.

### Exemple 8 : Bavarois Fraises des Bois et Mûres

| | |
|---|---|
| 250 g | pulpe de fraise des bois |
| 100 g | purée de mûres |
| 200 g | sucre semoule |
| 60 g | jaune d'oeufs |
| **80 g** | **beurre de cacao en poudre** |
| 750 g | crème fleurette montée |

Porter à ébullition la pulpe de fraise des bois et la purée de mûre, verser sur le sucre et les jaunes d'oeufs, mélangés au préalable. Cuire à 85°C, chinoiser et ajouter le beurre de cacao, refroidir à 18°C et ajouter la crème fouetté bien montée.

### Exemple 9 : Crème pour tarte et entremets citron, orange, passion ou Mandarine

| | |
|---|---|
| 250 g | pulpe |
| 250 g | sucre semoule |
| 200 g | oeufs entiers |
| 200 g | jaune d'oeufs |
| 200 g | beurre laitier |
| **150 g** | **beurre de cacao en poudre** |

Porter la pulpe à ébullition, verser sur les oeufs, les jaunes d'oeufs et le sucre, mélanger au préalable et cuire à 85°C au micro-onde ou au bain-marie, ajouter le beurre laitier et le beurre de cacao, refroidir.

## Revendications

1. Utilisation d'une composition comportant essentiellement comme produit de substitution de la gélatine dans des préparations culinaires du beurre de cacao.

2. Utilisation selon la revendication 1, **caractérisée en ce que** la composition est désodorisée à 90-95%.

3. Utilisation selon la revendication 1 ou 2, **caractérisée en ce que** la composition est présentée sous forme de poudre.

4. Utilisation selon l'une quelconque des revendications 1 à 3, pour la fabrication de pâtisseries.

## Patentansprüche

1. Verwendung einer Zusammensetzung, die im Wesentlichen als Ersatzprodukt für Gelatine in kulinarischen Zubereitungen, Kakaobutter aufweist.

2. Verwendung nach Anspruch 1, **dadurch gekennzeichnet, dass** die Zusammensetzung von 90 bis 95 % desodoriert ist.

3. Verwendung nach Anspruch 1 oder 2, **dadurch gekennzeichnet, dass** die Zusammensetzung in Pulverform vorkommt.

4. Verwendung nach einem der Ansprüche 1 bis 3 für die Herstellung von Backwaren.

## Claims

1. Use of a composition essentially comprising as gelatin substitution product, in culinary preparations, of cocoa butter.

2. The use according to claim 1, wherein said composition is deodorized to an extent of 90-95%.

3. The use according to claim 1 or 2, wherein said composition is in the form of a powder.

4. The use according to anyone of claims 1 to 3, for pastry-making.
